## Europäisches Patentamt
## European Patent Office
## Office européen des brevets

(19)

(11) Veröffentlichungsnummer: **0 116 609**
**B1**

(12) ## EUROPÄISCHE PATENTSCHRIFT

(45) Veröffentlichungstag der Patentschrift:
**29.06.88**

(51) Int. Cl.⁴: **G 01 V 9/00**

(21) Anmeldenummer: **83902755.4**

(22) Anmeldetag: **19.06.83**

(86) Internationale Anmeldenummer:
**PCT/EP 83/00221**

(87) Internationale Veröffentlichungsnummer:
**WO 84/01035 (15.03.84 Gazette 84/07)**

(54) **EINHAND-TESTSTAB.**

(30) Priorität: **27.08.82 DE 3232041**

(43) Veröffentlichungstag der Anmeldung:
**29.08.84 Patentblatt 84/35**

(45) Bekanntmachung des Hinweises auf die Patenterteilung:
**29.06.88 Patentblatt 88/26**

(84) Benannte Vertragsstaaten:
**AT CH FR GB LI NL**

(56) Entgegenhaltungen:
**DE-A-2 259 812**
**DE-A-2 451 226**
**DE-A-3 027 367**
**FR-A-2 421 627**

**Prokop/Wimmer, "Wünschelrute-Erdstrahlen, Radiästhesie", F. Enke-Verlag, Stuttgart 1977, S. VII, VIII, 78-83**

(73) Patentinhaber: **MICHAEL GEISELER DBF-VERTRIEBS- GMBH, Arabellastrasse 5, D-8000 Munchen 81 (DE)**

(72) Erfinder: **OBERBACH, Josef, Schlosstrasse 9, D-8022 Grünwald (DE)**

(74) Vertreter: **Wagner, Karl H., WAGNER & GEYER Patentanwälte Gewuerzmuehlstrasse 5 Postfach 246, D-8000 München 22 (DE)**

EP 0 116 609 B1

### Beschreibung

### Einhand-Teststab

Die Erfindung bezieht sich auf einen Einhand-Teststab wie er bereits aus der DE-OS-3 027 367 bekannt ist.

Dieser bekannte Teststab besteht im wesentlichen aus einem Handgriffteil sowie einem sich von diesem aus erstreckenden Anzeigeteil. Der Anzeigeteil seinerseits besteht aus einem im Handgriffteil befestigten Draht, der an seinem entgegengesetztliegenden Ende ein Abschlußelement trägt. Dieser bekannte Teststab erlaubt präzisere und umfangreichere Messungen als bereits bekannte Geräte dieser Art. Ein gewisser Nachteil dieses bekannten Stabs besteht allerdings darin, daß die Länge des Einhand-Teststabs insgesamt verhältnismäßig groß ist, was zu gewissen Nachteilen insbesondere beim Transport führt.

Der Erfindung liegt die Aufgabe zugrunde, einen Einhand-Teststab der oben beschriebenen Art, wie er insbesondere in DE-OS-3 027 367 offenbart ist, derart weiterzubilden, daß ein einfacher Transport möglich wird, ohne daß dessen Eigenschaften ungünstig beeinflußt werden. Ferner bezweckt die Erfindung, den bekannten Stab in seiner Empfindlichkeit noch weiter zu verbessern.

Zur Lösung dieser Aufgabe sieht die im Anspruch 1 genannten Maßnahmen vor.

Es ist allgemein bekannt, Büschelstecker als Bauelemente für eine elektrische Steckverbindung zu verwenden.

Bevorzugte Ausgestaltungen der Erfindung ergeben sich insbesondere aus den abhängigen Patentansprüchen sowie aus der Beschreibung eines Ausführungsbeispiels anhand der Zeichnung; in der Zeichnung zeigt:

Fig. 1 einen Einhand-Teststab teilweise im Schnitt;

Fig. 2 eine leicht vergrößerte Einzelheit des Anzeigeteils des Teststab.

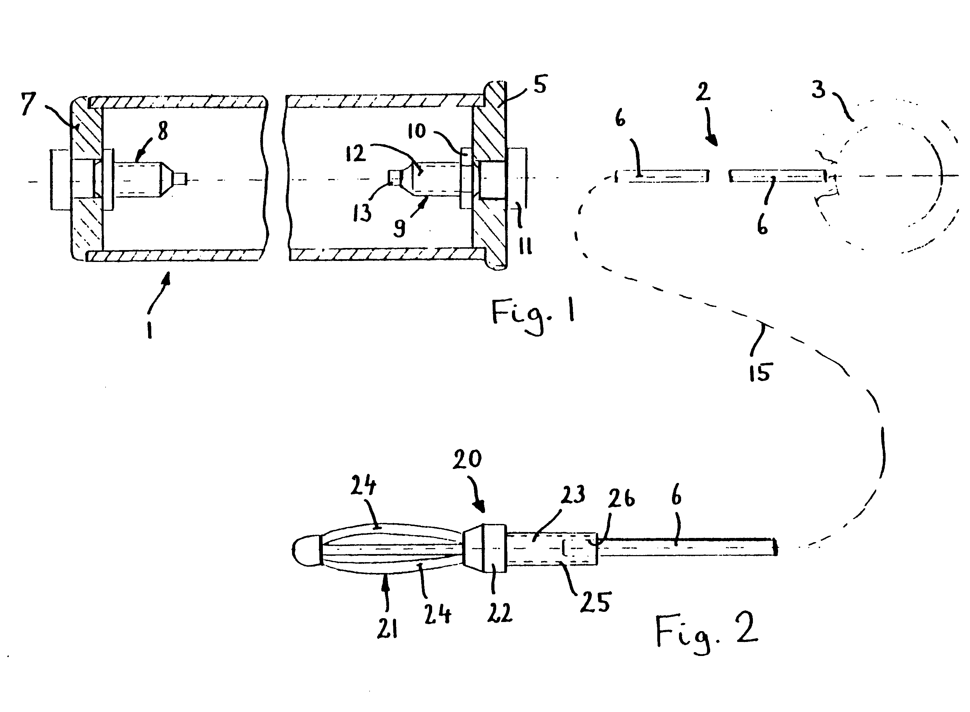

Die in Fig. 1 gezeigte Ausbildungsform des erfindungsgemäßen Einhand-Teststab weist ganz allgemein einen Handgriffteil 1 sowie einen daran befestigten Anzeigeteil 2 auf. Der Anzeigeteil 2 besteht vorzugsweise aus einem Draht 6, der mit seinem einen Ende an einem ersten in Fig. 2 gezeigten Kupplungselement 20 befestigt ist. Das entgegengesetztliegende Ende des Drahtes steht mit einem Abschlußelement 3 in Verbindung.

Der Handgriffteil 1 ist vorzugsweise in der Form eines Zylinders ausgebildet. Im dargestellten Ausführungsbeispiel ist der Zylinder ein Hohlzylinder, und er besteht aus einem Metallrohr 4. Der Handgriffteil 1 bzw. das Rohr 4 müssen aber nicht unbedingt aus Metall bestehen. Allerdings wird Metall bevorzut.

Das Rohr ist beidseitig mit Verschlußstopfen 7 enthält eine Buchse 8 zum Anschluß weitere Geräte. Der rechte Verschlußstopfen 5 ist mittig mit einem zweiten Kupplungselement 9 in der Form einer Buchse ausgestattet. Vorzugsweise wird eine Buchse 9 ähnlich der Buchse 8 verwendet. Die Buchse 9 besteht aus einem Auflageteil 11, der an der Außenseite des Verschlußstopfen 5 anliegt. Mittels einer an der Innenseite des Verschlußstopfens 5 anliegenden Mutter 10 wird die Buchse 9 festgelegt. Ein Gewindeabschnitt 12 gestatten das Aufschrauben der Mutter 10. Das Gewindeteil 12 geht in einen Ansatz 13 mit vermindertem Querschnitt über.

Der Draht 6 ist mit seinem zum Abschlußelement 3 entgegengesetztliegenden Ende in dem ersten Kupplungselement 20 befestigt. Vorzugsweise ist das erste Kupplungselement 20 in der Form eines Steckers ausgebildet. Der Stecker ist ein Büschelstecker. Die Isolierhülse des Steckers ist in Fig. 2 weggelassen. Der gemäß der Erfindung vorgesehene Stecker 20 besteht aus einem Tragabschnitt 22, von dem aus ein mit Außengewinde 25 versehener Gewindeabschnitt 23 verläuft. In eine Öffnung 26 im Gewindeabschnitt 23 ist der Draht 6 eingesteckt und darinnen befestigt, beispielsweise mittels einer nicht gezeigten Schraube. Das Kontaktelement 21 des Steckers 20 (in Fig. 2 vergrößert dargestellt) kann in die Buchse 9 eingesteckt werden. Das Kontaktelement 21 wird vorzugsweise durch einzelne, büschelartig angeordnete Drahtelemente 24 gebildet. Vorzugsweise ist der Stecker 20 versilbert.

Vorzugsweise beträgt die Länge des Drahtes zwischen dem Stecker 20 und dem Abschlußelement 3 28 cm. Die Länge des Steckers 20 liegt in der Größenanordnung von 3 cm.

### Patentansprüche

1. Einhand-Teststab mit einem Handgriffrohrteil (1) sowie einem an diesem vorgesehenen Anzeigeteil (2), welches aus einem einen Ring (3) schwingfähig tragenden Draht (6) besteht, und in einem Abschlußstopfen des Handgriffrohrteils (1) sitzt, dadurch gekennzeichnet, daß der Draht (6) an seinem mit dem Handgriffrohrteil (1) zu verbindenden Ende ein erstes Kupplungselement (20) in Gestalt eines Büschlesteckers aufweist, welcher mit einem zweiten Kupplungselement (9) in Gestalt einer Buchse kuppelbar ist, die in dem Abschlußstopfen (5) des Handgriffrohrteils (1) angeordnet ist.

2. Einhand-Teststab nach einem der Anspruch 1, dadurch gekennzeichnet, daß die Buchse (9) bzw. der Stecker (20) mittig in dem Abschlußstopfen (5) angeordnet ist.

3. Einhand-Teststab nach einem oder mehreren der vorhergehenden Ansprüche, dadurch gekennzeichnet, daß die Buchse (9) ein in das Innere des Handgriffrohrteils (1) ragendes Gewindeteil (12) aufweist.

4. Einhand-Teststab nach einem oder mehreren der vorhergehenden Ansprüche, dadurch gekennzeichnet, daß das erste und/oder zweite Kupplungselement (9, 20) versilbert ist bzw. sind.

## Claims

1. A single handed test stick comprising a tube shaped handle member (1) and an indicating member (2) provided at said handle member (1), said indicating member including a wire (6) which is located in a closing plug of the tube shaped handle member (1) and carries a ring (3) for oscillations characterized in that the wire (6) comprises at its end adapted to be connected with the tube shaped handle member (1) a first coupling element (20) in the form of a bunsh-type plug (Büschel plug), said bunsh-type plug being adapted to be coupled to a second coupling element (9) in the form of a socket means, said socket means being arranged in the closing plug (5) of the handle member (1)

2. Single handed test stick of claim 1 characterized in that said socket means (9) and the connector (20), respectively, are centrally located in said closing plug (5)

3. Single handed test stick as set forth in one or more of the preceding claims characterized in that said socket means (9) comprises a threaded portion (12) extending into the interior of the tube shaped handle member (1)

4. Single handed test stick as set forth in one or more of the preceding claims characterized in that the first and/or second coupling element (9, 20) is silver plated.

## Revendications

1. Baguette de test utilisable d'une seule main, comportant une partie tubulaire de préhension (1) ainsi qu'une partie d'indication (2) montée sur cette dernière, laquelle partie d'indication (2) consiste en un fil métallique (6) portant un anneau (3) de manière à pouvoir osciller et est logée dans un bouchon d'obturation de la partie tubulaire de préhension (1) caractérisée en ce que le fil métallique (6) présente, au niveau de son extrémité destinée à être raccordée à la partie tubulaire de préhension (1), un premier élément d'accouplement (20) conçu sous la forme d'une fiche en faisceau apte à être accouplée avec un second élément d'accouplement (9) conçu sous la forme d'une douille disposée dans le bouchon d'obturation (5) de la partie tubulaire de préhension (1).

2. Baguette de test utilisable d'une seule main selon la revendication 1, caractérisée en ce que la douille (9), respectivement, la fiche (20) est disposée au centre du bouchon d'obturation (5).

3. Baguette de test utilisable d'une seule main selon l'une au moins des revendications précédentes, caractérisée en ce que la douille (9) présente une partie filetée (12) qui fait saillie à l'intérieur de la partie tubulaire de préhension (1).

4. Baguette de test utilisable d'une seule main selon l'une au moins des revendications précédentes, caractérisée en ce que le premier et/ou le second élément d'accouplement (9, 20) est, ou sont argenté(s).

Fig. 1

Fig. 2